# EUROPEAN PATENT SPECIFICATION

(11) **EP 3 641 226 B1**
(45) Date of publication and mention of the grant of the patent: **04.10.2023**
(21) Application number: 17923842.3
(22) Date of filing: 31.08.2017
(51) Int. Cl.: H04W 88/04, H04W 76/12

(54) **ADDRESS ALLOCATION METHOD AND RELATED DEVICE**
ADRESSZUWEISUNGSVERFAHREN UND ZUGEHÖRIGE VORRICHTUNG
PROCÉDÉ D'ATTRIBUTION D'ADRESSE ET DISPOSITIF ASSOCIÉ

(43) Date of publication of application: 22.04.2020
(73) Proprietor: Huawei Technologies Co., Ltd., Longgang District Shenzhen, Guangdong 518129 (CN)
(72) Inventor: ZENG, Bo, Shenzhen Guangdong 518129 (CN)
(74) Representative: Pfenning, Meinig & Partner mbB
(86) International application number: PCT/CN2017/099981
(87) International publication number: WO 2019/041247

(56) References cited:
- WO-A1-2010/039085
- CN-A- 101 227 494
- CN-A- 102 123 387
- CN-A- 107 070 755
- US-A1- 2015 351 141
- US-B1- 6 763 012
- LIU Y TU C ZHU ZTE CORPORATION W HENDERICKS D DERKSEN L THIEBAUT ALCATEL-LUCENT G: "DHCP Options for 3GPP Service; draft-liu-dhc-3gpp-option-01.txt", DHCP OPTIONS FOR 3GPP SERVICE; DRAFT-LIU-DHC-3GPP-OPTION-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 March 2012 (2012-03-12), pages 1-14, XP015081916, [retrieved on 2012-03-12]

## Description

### TECHNICAL FIELD

This application relates to address assignment methods for a mobile communications system, a terminal device, a packet core network device, computer readable storage media, and computer program products.

### BACKGROUND

With continuous development of communications technologies, an address assignment manner in a mobile communications system is also continuously developing. A long term evolution (Long Term Evolution, LTE) system is used as an example. A terminal device first accesses a packet core network device, then the packet core network device assigns an IP address to the terminal device, and finally the terminal device assigns the IP address to a device connected to the terminal device. In the foregoing manner, a device that accesses the terminal device can directly access the packet core network device by using the IP address. Therefore, this manner becomes an important address assignment means.

Document US 2015/351141 A1 describes a mobile terminal device comprising: a request unit configured to send at least a request message for establishing only one Packet Data Network (PDN) connection which provides connectivity to a PDN associated with an access point name (APN), the PDN connection being used only for a communication between an external gateway device and a plurality of information terminal devices which include said at least one information terminal device; a reception unit configured to receive the APN, an evolved packet system (EPS) bearer ID, and an address block, the address block being allocated by the external gateway device to the PDN connection, and the EPS bearer ID being allocated to the PDN connection; and an allocation unit configured to allocate an IPv6 prefix based on the address block to the at least one information terminal device, and transfer, based on the EPS bearer ID, user data as a router from the at least one information terminal device to the PDN associated with the APN via the PDN connection, wherein the user data being transferred from the information terminal devices using an IP address configured based on the assigned IPv6 prefix.

Document US 6 763 012 B 1 describes a method of connecting a plurality of devices, each having a unique Internet Protocol (IP) address, through a single mobile terminal (MT) and a single wireless link to a packet data network (PDN), said method comprising the steps of: connecting the plurality of devices and the MT on a network; recording in a subscriber database associated with the PDN, how many unique individual IP addresses are to be included in the network IP address sent to the MT; sending a network IP address from the PDN to the MT, the network IP address comprising a plurality of unique individual IP addresses; and distributing by the MT, the plurality of unique individual IP addresses to the plurality of devices on the network. Document LIU Y TU C ZHU ZTE CORPORATION W HENDERICKS D DERKSEN L THIEBAUT ALCATEL-LUCENT G, "DHCP Options for 3GPP Service; draft-liudhc-3gpp-option-01.txt", DHCP OPTIONS FOR 3GPP SERVICE; DRAFT-LIU-DHC-3GPP-OPTION-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, (20120312), pages 1 - 14, XP015081916 defines the use of 3GPP specific option transferred to Dynamic Host Configuration Protocol (DHCP) server by DHCP client.

Currently, if the terminal device is connected to two or more devices, the terminal device may assign an IP address to one of the two or more devices, so that the device can normally access a packet core network to implement functions such as network access and communication.

However, in this case, another device cannot implement functions such as network access and communication, and consequently functions of the another device are greatly limited.

### SUMMARY

A technical problem to be resolved in embodiments of this application is how to ensure normal functioning of two or more devices when a terminal device is connected to these devices. The embodiments of this application provide an address assignment method and a related device according to the independent claims. Therefore, when a terminal device is connected to two or more devices, the terminal device can assign an IP address to each of these devices, so that it can be ensured that these devices normally function. The invention is set out in the appended set of claims. According to a first aspect, an embodiment of this application provides an address assignment method for a mobile communications system, wherein the method is applied to a terminal device, and comprises: receiving an address assignment request of a first device, wherein the address assignment request of the first device comprises access point information of the first device; parsing the access point information and obtaining an access point name of the first device based on the access point information of the first device; encapsulating the access point name of the first device into a first connection request; sending the first connection request to a packet core network device, wherein the first connection request is used to establish a first packet data network, further referred as first PDN, connection; receiving a first IP address assigned by the packet core network device in the first PDN connection; assigning the first IP address to the first device; after assigning the first IP address to the first device, receiving an address assignment request of a second device, wherein the address assignment request of the second device is used to request a second IP address; sending a second connection request to the packet core network device, wherein the second connection request is used to establish a second PDN connection; receiving the second IP address; and assigning the second IP address to the second device. Further the second connection request carries an access point name of the second device; the access point name of the second device is used to identify a requested service type; the second IP address is assigned by the packet core network device in the second PDN connection based on the access point name of the second device; the address assignment request of the second device further comprises access point information of the second device; and the method further comprises obtaining the access point name of the second device based on the access point information of the second device.

It can be learned that, by implementing the method provided in the first aspect, when the terminal device has assigned an IP address to the first device, the terminal device can newly establish the second PDN connection to the packet core network device to further assign an IP address to the second device, so that the IP addresses are respectively assigned to the first device and the second device, and it can be ensured that the first device and the second device normally function.

The second connection request carries an access point name of the second device used to identify a requested service type, and the packet core network device assigns the second IP address based on the access point name of the second device.

In this way, the packet core network device may determine, based on the service type corresponding to the access point name in the second connection request, a network domain to which the second IP address belongs, so that the packet core network device can accurately and quickly assign the second IP address in the network domain.

The address assignment request further includes access point information of the second device, and the method further includes: obtaining the access point name of the second device based on the access point information of the second device.

It can be learned that, by implementing this optional implementation, the terminal device may determine, after the second device notifies the terminal device of the access point name, a network domain to which an IP address required by the second device belongs, so that the packet core network device can accurately and quickly assign the second IP address in the network domain.

In an optional implementation, the access point name includes a default access point name of the terminal device, and the second IP address is assigned by the packet core network device based on the default access point name of the terminal device.

It can be learned that, by implementing this optional implementation, a network domain to which the default access point name belongs may be determined based on the default access point name of the terminal device, so that the packet core network device can accurately and quickly assign the second IP address in the network domain.

Before the terminal device assigns the first IP address to the first device, the method further includes: receiving an address assignment request of the first device, where the address assignment request of the first device includes access point information of the first device; parsing the access point information of the first device to obtain an access point name; sending, to the packet core network device, a first connection request used to establish a first PDN connection; receiving a first IP address assigned by the packet core network device in the first PDN connection; and assigning the first IP address to the first device.

In this way, the terminal device may determine, after the first device notifies the terminal device of the access point name, a network domain to which an IP address required by the first device belongs, so that the packet core network device can accurately and quickly assign the first IP address in the network domain, and the terminal device can assign the first IP address to the first device for use.

According to a second aspect, an embodiment of this application further provides an address assignment method for a mobile communications system, wherein the method is applied to a packet core network device, and comprises: receiving a first connection request of a terminal device, wherein the first connection request carries an access point name of a first device, wherein the access point name of the first device is obtained by the terminal device based on access point information of the first device, wherein the access point information of the first device is carried in an address assignment request of the first device, and wherein the address assignment request of the first device is received by the terminal device; establishing a first packet data network, further referred as first PDN, connection based on the first connection request, and assigning a first IP address in the first PDN connection based on the access point name of the first device; sending the first IP address to the terminal device, so that the terminal device assigns the first IP address to the first device; after assigning the first IP address to the terminal device, receiving a second connection request of the terminal device; establishing a second PDN connection based on the second connection request; assigning a second IP address in the second PDN connection; and sending the second IP address to the terminal device for assigning the second IP address to a second device. Further, the second connection request carries an access point name of the second device, wherein the access point name of the second device is obtained by the terminal device based on access point information of the second device, wherein the access point information of the second device is carried in an address assignment request of the second device, and wherein the address assignment request of the second device is received by the terminal device; the access point name of the second device is used to identify a requested service type; and the second IP address is assigned in the second PDN connection based on the access point name of the second device.

It can be learned that, by implementing the method provided in the second aspect, when the packet core network device has assigned an IP address to the terminal device, the packet core network device can newly establish the second PDN connection to reassign an IP address to the terminal device, so that the two IP addresses are assigned to the terminal device, and the terminal device can respectively assign the two obtained IP addresses for use to a first device and the second device that are connected to the terminal device.

The second connection request carries an access point name of the second device, and the access point name of the second device is used to identify a requested service type; and the method further includes: assigning the second IP address based on the access point name of the second device.

In this way, the packet core network device may determine, based on the service type corresponding to the access point name in the second connection request, a network domain to which the second IP address belongs, so that the packet core network device can accurately and quickly assign the second IP address in the network domain.

In an optional implementation, the access point name includes a default access point name of the terminal device; and the assigning the second IP address based on the access point name may be specifically: assigning the second IP address based on the default access point name of the terminal device.

It can be learned that, by implementing this optional implementation, a network domain to which the default access point name belongs may be determined based on the default access point name of the terminal device, so that the packet core network device can accurately and quickly assign the second IP address in the network domain.

Before the packet core network assigns the first IP address to the terminal device, the method further includes: receiving a first connection request of the terminal device that carries an access point name of a first device; establishing a first PDN connection based on the first connection request, and assigning the first IP address in the first PDN connection based on the access point name of the first device; and assigning the first IP address to the terminal device, so that the terminal device assigns the first IP address to the first device.

In this way, when requesting the first IP address, the terminal device may notify the packet core network of the access point name of the first device to indicate a network domain to which an IP address required by the first device belongs, so that the packet core network device can accurately and quickly assign the first IP address in the network domain, and the terminal device can assign the first IP address to the first device for use.

According to a third example, a terminal device is provided. The terminal device has a function of implementing behavior of the terminal device in the first aspect or the possible implementations of the first aspect. The function may be implemented by hardware, or may be implemented by hardware by executing corresponding software. The hardware or the software includes one or more modules corresponding to the foregoing function. The module may be software and/or hardware. Based on a same inventive concept, for a problem-resolving principle and beneficial effects of the terminal device, refer to the first aspect and the possible method implementations of the first aspect, and the beneficial effects thereof. Therefore, for implementation of the terminal device, refer to the first aspect and the possible method implementations of the first aspect. Repeated descriptions are not provided herein again.

According to a fourth example, a packet core network device is provided. The packet core network device has a function of implementing behavior of the terminal device in the second aspect or the possible implementations of the second aspect. The function may be implemented by hardware, or may be implemented by hardware by executing corresponding software. The hardware or the software includes one or more modules corresponding to the foregoing function. The module may be software and/or hardware. Based on a same inventive concept, for a problem-resolving principle and beneficial effects of the packet core network device, refer to the second aspect and the possible method implementations of the second aspect, and the beneficial effects thereof. Therefore, for implementation of the terminal device, refer to the second aspect and the possible method implementations of the second aspect. Repeated descriptions are not provided herein again.

According to a fifth aspect, a terminal device is provided. The terminal device includes: a memory, configured to store one or more programs; and a processor, configured to invoke the program stored in the memory, to implement the solution in the method design of the first aspect. For a problem-resolving implementation and beneficial effects of the terminal device, refer to the first aspect and the possible method implementations of the first aspect, and the beneficial effects thereof. Repeated descriptions are not provided herein again.

According to a sixth aspect, a packet core network device is provided. The packet core network device includes: a memory, configured to store one or more programs; and a processor, configured to invoke the program stored in the memory, to implement the solution in the method design of the second aspect. For a problem-resolving implementation and beneficial effects of the terminal device, refer to the second aspect and the possible method implementations of the second aspect, and the beneficial effects thereof. Repeated descriptions are not provided herein again.

According to a seventh aspect, a computer readable storage medium is provided. The computer storage medium stores a computer program, the computer program includes a program instruction, and when the program instruction is run by a processor, the processor is enabled to perform the method in the first aspect and the possible method implementations of the first aspect, and implement the beneficial effects thereof. Repeated descriptions are not provided herein again.

According to an eighth aspect, a computer readable storage medium is further provided. The computer storage medium stores a computer program, the computer program includes a program instruction, and when the program instruction is run by a processor, the processor is enabled to perform the method in the second aspect and the possible method implementations of the second aspect, and implement the beneficial effects thereof. Repeated descriptions are not provided herein again.

According to a ninth aspect, a computer program product is provided. When the computer program product is run on a computer, the computer is enabled to perform the method in the first aspect and the possible method implementations of the first aspect. According to a tenth aspect, a computer program product is further provided. When the computer program product is run on a computer, the computer is enabled to perform the method in the second aspect and the possible method implementations of the second aspect.

### BRIEF DESCRIPTION OF DRAWINGS

FIG. 1 is a diagram of a network architecture used for address assignment according to an example;
FIG. 2 is a schematic diagram of a scenario of address assignment according to an example;
FIG. 3 is a schematic flowchart of an address assignment method according to an example;
FIG. 4 is a schematic diagram of a scenario of an address assignment method according to an example;
FIG. 5 is a schematic diagram of a scenario of another address assignment method according to an example;
FIG. 6 is a schematic diagram of a scenario of still another address assignment method according to an example;
FIG. 7 is a schematic flowchart of another address assignment method according to an example;
FIG. 8 is a schematic diagram of a scenario of yet another address assignment method according to an example;
FIG. 9 is a schematic diagram of a scenario of yet another address assignment method according to an embodiment of this application;
FIG. 10 is a schematic flowchart of still another address assignment method according to an example;
FIG. 11 is a schematic structural diagram of a terminal device according to an example;
FIG. 12 is a schematic structural diagram of a packet core network device according to an example;
FIG. 13 is a schematic structural diagram of another terminal device according to an example; and
FIG. 14 is a schematic structural diagram of another packet core network device according to an example.

### DESCRIPTION OF EMBODIMENTS

The following describes the embodiments of this application with reference to the accompanying drawings in the embodiments of this application.

To better understand an address assignment method and a related device according to the embodiments of this application, the following first describes a network architecture in this application.

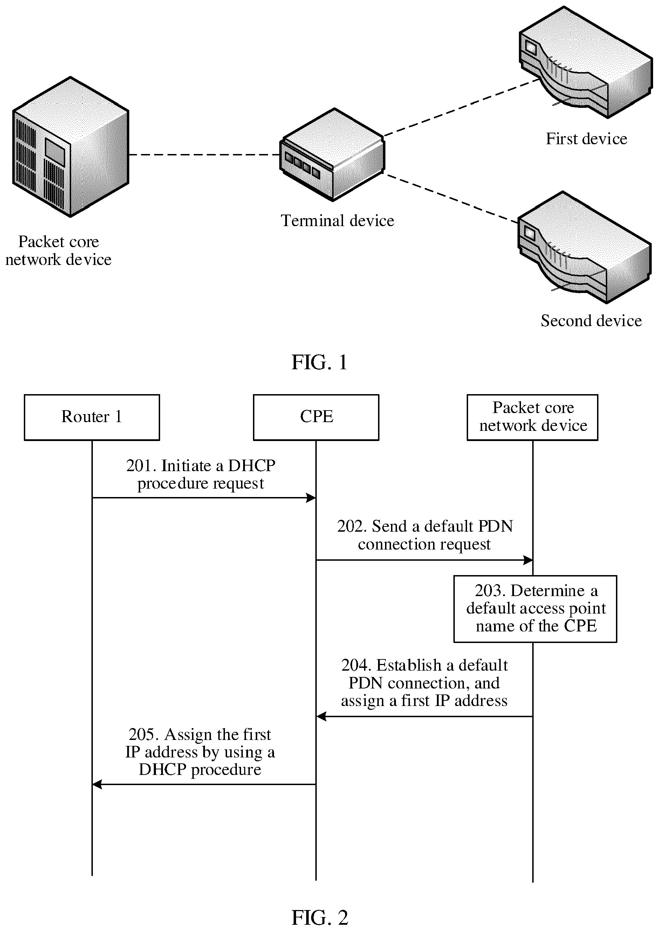

FIG. 1 is a diagram of a network architecture used for address assignment according to an example.

It should be noted that the terminal device may be various types of intelligent terminal devices, for example, may be a device that can assign an IP address, such as customerpremises equipment (Customer Premise Equipment, CPE), a wireless network forwarder, a networking device, or a wireless switch.

It should be further noted that the packet core network device may be a device in an all-IP packet core network (Evolved Packet Core, EPC) system, and is configured to connect to an all-IP packet core network. Specifically, the packet core network device may be, for example, a device that can obtain an IP address, such as a public data network gateway (Public Data Network Gateway, PGW), an MME (Mobility Management Entity) gateway, or a serving gateway (Serving Gateway, SGW).

It should be further noted that the first device and the second device each may be a device that can receive a radio signal, such as a wireless router, a smartphone, a tablet computer, a wearable device, or a personal digital assistant (Personal Digital Assistant, PDA).

In a mobile communications system, a device (for example, the first device or the second device) usually needs to obtain an IP address before accessing a network, and if the device does not obtain the IP address, the device possibly cannot implement functions such as network access and communication. Therefore, IP address assignment in the mobile communications system is an important step.

For better description, the following describes the diagram of the network architecture by using an example in which the terminal device is CPE, the first device is a router 1, and the second device is a router 2. However, in another example, the foregoing device may alternatively be another type of device.

An LTE system is used as an example (it should be noted that the LTE system herein is merely an example of the mobile communications system, and in another implementation, the mobile communications system may alternatively be a 3G communications system, a 5G communications system, a subsequent evolved system, or the like). The packet core network device assigns only one IP address to the CPE, so that the CPE accesses a network. Then, the CPE assigns the IP address to the router 1 connected to the CPE. On the conventional Ethernet, an IP address is usually assigned by a dynamic host configuration protocol (Dynamic Host Configuration Protocol, DHCP) server. Therefore, when the CPE is to assign an IP address, the CPE assigns the IP address to the router 1 by using a DHCP procedure provided by the DHCP server. For example, for a procedure of assigning the IP address by the packet core network device, refer to FIG. 2. FIG. 2 is a schematic diagram of a scenario of address assignment according to an example. The example shown in FIG. 2 is not an embodiment of the present invention but helpful for understanding certain aspects thereof. As shown in FIG. 2, in 201, the router 1 sends a DHCP procedure request to the CPE. Specifically, the DHCP procedure request may be a DHCP discover packet in the DHCP procedure, and is used to request a first IP address from the CPE. In 202, the CPE sends a default PDN connection request to the packet core network device. The default PDN connection may be used by the CPE to access a network, in other words, obtain the first IP address. The default PDN connection request may carry no access point name.

In 203, the packet core network device may determine a default access point name of the CPE based on registration information of the CPE. In 204, the packet core network device may establish a default PDN connection, determine a service type of the CPE based on the default access point name, determine a network domain of the first IP address based on the service type, and assign the first IP address in the network domain. It should be noted that one IP address may be assigned in one PDN connection. Network domains connected to a plurality of PDN connections may be different, so as to implement different service types. Alternatively, network domains connected to a plurality of PDN connections may be the same, and corresponding assigned IP addresses may be different IP addresses in a same network domain. An access point name may be used to distinguish between these different network domains. In other words, the access point name may identify a requested service type.

The service type may be, for example, a service such as a voice call service, a wireless application protocol (Wireless Application Protocol, WAP) access service, or an internet access service. One IP address may correspond to one network domain. One service type may correspond to one network domain, or a plurality of service types may correspond to one network domain. For example, a network domain corresponding to the internet access service may be a network domain of a common public network, and the WAP access service may also correspond to the network domain of the common public network.

In 205, the CPE may assign the first IP address to the router 1 by using the DHCP procedure. Specifically, the CPE may assign the first IP address to the router 1 by using a DHCP offer packet in the DHCP procedure.

However, when the CPE also accesses the router 2, if the CPE has assigned the first IP address to the router 1 in the address assignment manner shown in FIG. 2, because the packet core network device assigns only one IP address to the CPE by default in a bridging mode (to be specific, a device such as a router is connected to the packet core network device by using the CPE) in the LTE system, the router 2 cannot request the IP address, and the router 2 possibly cannot implement functions such as network access and communication.

To resolve the foregoing problem, the embodiments of this application provide an address assignment method and a related device. Therefore, when a terminal device is connected to two or more devices, the terminal device assigns an IP address to each of these devices.

Still referring to FIG. 1, an example in which the terminal device is CPE, the first device is a router 1, and the second device is a router 2 is used. After the CPE accesses both the router 1 and the router 2, and the CPE has assigned a first IP address to the router 1, if the CPE receives an address assignment request of the router 2 that is used to request a second IP address, the CPE may send a second connection request to the packet core network device. The second connection request is used to newly establish a second PDN connection. Then, the packet core network device may establish the second PDN connection to the CPE based on the second connection request, and assign the second IP address in the second PDN connection. Finally, the CPE may assign the second IP address to the router 2.

In some feasible implementations, the second connection request may carry an access point name, so that the packet core network device assigns the second IP address based on the access point name.

It should be noted that the packet core network device initially assigns a first IP address to the CPE in a first PDN connection. The first PDN connection may be a default PDN connection. Therefore, in the default PDN connection, when requesting the first IP address, the CPE may not add the access point name, but the packet core network determines a default access point name of the CPE based on registration information of the CPE, and assigns the first IP address based on the default access point name. However, the packet core network device reassigns the second IP address to the CPE in the newly established second PDN connection (a non-default PDN connection). In this case, if the second connection request does not carry the access point name, because the packet core network no longer assigns an IP address in the default PDN connection, the default access point name of the CPE possibly cannot be obtained. Consequently, the second IP address cannot be assigned, and an address assignment success rate is greatly reduced. Therefore, the second connection request carries the access point name, so that the packet core network device can determine a network domain to which the second IP address belongs, and the packet core network device can accurately and quickly assign the second IP address in the network domain.

In some feasible implementations, the access point name carried in the second connection request may be specifically the default access point name of the CPE. The packet core network may assign the second IP address based on the default access point name of the terminal device.

In some feasible implementations, when the router 2 requests the second IP address from the CPE, access point information of the router 2 may be carried. The CPE may obtain an access point name of the second device based on the access point information of the router 2, and add the access point name of the second device when requesting the second IP address from the packet core network device. Then, the packet core network may assign the second IP address based on the access point name of the second device. In some feasible implementations, when requesting the first IP address from the CPE, the router 1 may also add access point information of the router 1. The CPE may obtain an access point name of the router 1 based on the access point information of the router 1, and add the access point name of the first device when requesting the first IP address from the packet core network device. Then, the packet core network may establish a first PDN connection (in this case, the first PDN connection is a non-default PDN connection) to the CPE, and assign the first IP address in the first PDN connection based on the access point name of the first device.

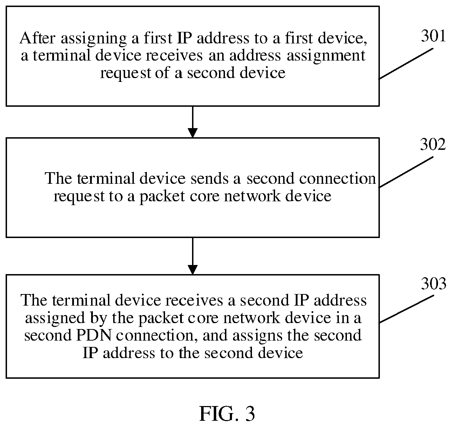

To describe this application more clearly, the following describes method embodiments of this application. FIG. 3 is a schematic flowchart of an address assignment method according to an example. The example shown in FIG. 3 is not an embodiment of the present invention but helpful for understanding certain aspects thereof. As shown in FIG. 3, this example includes the following steps.

301. After assigning a first IP address to a first device, a terminal device receives an address assignment request of a second device.

It should be noted that the first device may be a device to which the terminal device initially assigns an IP address, and there may be one first device.

It should be further noted that there may be one or more second devices, and the terminal device may be connected to at least one second device. For example, if the terminal device is connected to a second device 1 and a second device 2, the terminal device may separately receive an address assignment request of the second device 1 and an address assignment request of the second device 2. Certainly, the foregoing manner is merely an example and is not exhaustive, and the terminal device may alternatively be connected to three or more second devices.

In some feasible implementations, the terminal device may be connected to the first device and the at least one second device. A specific connection manner may be a wired connection manner or a wireless connection manner.

It should be further noted that the address assignment request of the second device may be used to request the second IP address, and the second IP address can enable the second device to implement functions such as network access and communication. In other words, when the second device needs the second IP address, the second device sends the address assignment request of the second device to the terminal device.

In some feasible implementations, the address assignment request of the second device may be a DHCP discover packet in a DHCP procedure, and the second device and the terminal device may implement IP address assignment by using the DHCP procedure. When receiving the DHCP discover packet of the second device, the terminal device may determine that the second device requests the second IP address from the terminal device.

302. The terminal device sends a second connection request to a packet core network device.

The second connection request is used to establish a second PDN connection.

It should be noted that the second PDN connection may be a non-default PDN connection. In other words, the terminal device may newly establish the second PDN connection to the packet core network device, to assign the second IP address in the second PDN connection.

If there are a plurality of second devices, there may also be a plurality of second connection requests, and each second connection request is used to establish one second PDN connection.

In some feasible implementations, the second connection request carries an access point name, and the packet core network device assigns the second IP address based on the access point name.

During specific implementation, the terminal device may send the second connection request to the packet core network device. The second connection request carries the access point name, so that the packet core network device may establish the second PDN connection based on the access point name.

The access point name is used to identify a requested service type. The service type may be, for example, a service such as a voice call service, a WAP access service, or an internet access service. The service type may correspond to one network domain. The packet core network device may determine the service type based on the access point name, further determine the network domain corresponding to the service type, and assign the second IP address in the network domain.

The access point name may be an access point name of the terminal device, and there may be a plurality of access point names of the terminal device, which may include a default access point name of the terminal device. Alternatively, the access point name may be an access point name of the second device, and is sent by the terminal device. Alternatively, the access point name may be another access point name sent by the terminal device.

In some feasible implementations, the second IP address is assigned by the packet core network device based on the default access point name of the terminal device.

It should be noted that, when being to initially assign the first IP address to the terminal device, the packet core network device may assign the first IP address based on the default access point name. When further assigning the second IP address to the terminal device, if the second connection request carries the default access point name, it can be ensured that the first IP address and the second IP address are in a same network domain, so that a conflict at a location of the terminal device is avoided when the second device accesses a network by using the second IP address.

303. The terminal device receives the second IP address assigned by the packet core network device in the second PDN connection, and assigns the second IP address to the second device.

In some feasible implementations, when receiving the second connection request, the packet core network device may establish the second PDN connection based on the second connection request, and assign the second IP address to the terminal device in the second PDN connection. The terminal device may receive the second IP address, and assign the second IP address to the second device, so that the second device can implement functions such as network access and communication by using the second IP address.

During specific implementation, the packet core network device may assign the second IP address in the second PDN connection based on the access point name in the second connection request. For example, the access point name is CMNET. The packet core network device determines that the requested service type may be internet access, and may use an IP address in a network domain of the internet access as the second IP address and assign the second IP address to the second device.

In some feasible implementations, the terminal device further needs to assign the first IP address to the first device, and after assigning the first IP address to the first device, the terminal device may perform the method shown in steps 301 to 303.

A manner of obtaining the first IP address by the first device may be the manner shown in FIG. 2.

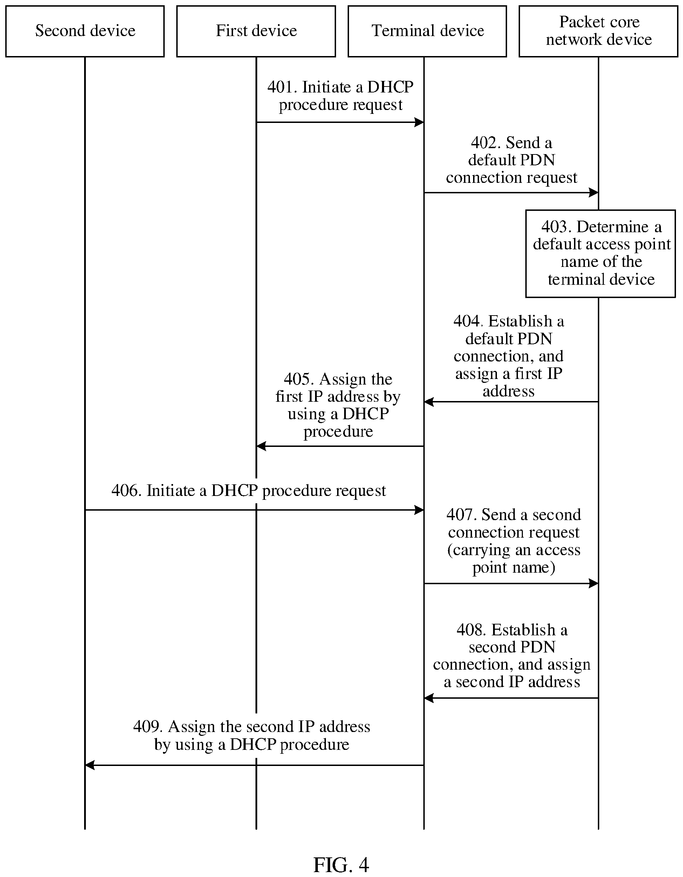

For better description, the following describes in detail the case in which the first device obtains the first IP address in the manner shown in FIG. 2, and the case in which the second device obtains the second IP address in the manner in this example. For example, FIG. 4 is a schematic diagram of a scenario of an address assignment method according to an example. The example shown in FIG. 4 is not an embodiment of the present invention but helpful for understanding certain aspects thereof. As shown in FIG. 4, in 401, the first device initiates a DHCP procedure request to a terminal device. The DHCP procedure request may carry no access point name. In 402, the terminal device may send a default PDN connection request to a packet core network device. In 403, the packet core network device may determine a default access point name of the terminal device based on registration information of the terminal device. In 404, the packet core network device establishes a default PDN connection, and assigns the first IP address to the terminal device based on the default access point name. In 405, the terminal device may assign the first IP address by using a DHCP procedure.

A sequence of steps 401 to 405 shown in FIG. 4 is not limited in this example. For example, the sequence of the steps may be that 401 to 405 are successively performed, or may be that 402 to 404 are performed before 401 and 405.

It should be further noted that, for a specific implementation process of 401 to 405 in FIG. 4, refer to the descriptions of 201 to 205 shown in FIG. 2 in the foregoing example. Details are not described herein again.

Further, in 406, the second device may initiate a DHCP procedure request to the terminal device. The DHCP procedure request may be specifically a DHCP discover packet. In 407, the terminal device may send a second connection request to the packet core network device. The second connection request carries an access point name, and the access point name may be the default access point name of the terminal device.

In 408, the packet core network device may establish a PDN connection based on the second connection request, and assign a second IP address to the terminal device based on the access point name. In 409, after receiving the second IP address, the terminal device may assign the second IP address to the second device by using a DHCP procedure. The DHCP procedure may be specifically a DHCP offer packet.

A sequence of steps 406 to 409 shown in FIG. 4 is not limited in this example. For example, the sequence of the steps may be that 406 to 409 are successively performed, or may be that 407 and 408 are performed before 406 and 409.

In some feasible implementations, the terminal device may alternatively assign the first IP address to the first device in a manner 2, including: receiving an address assignment request of the first device, where the address assignment request of the first device includes access point information of the first device; obtaining an access point name of the first device based on the access point information of the first device; sending a first connection request to the packet core network device, where the first connection request is used to establish a first PDN connection; receiving a first IP address assigned by the packet core network device in the first PDN connection; and assigning the first IP address to the first device.

It should be noted that the address assignment request of the first device is used to request the first IP address.

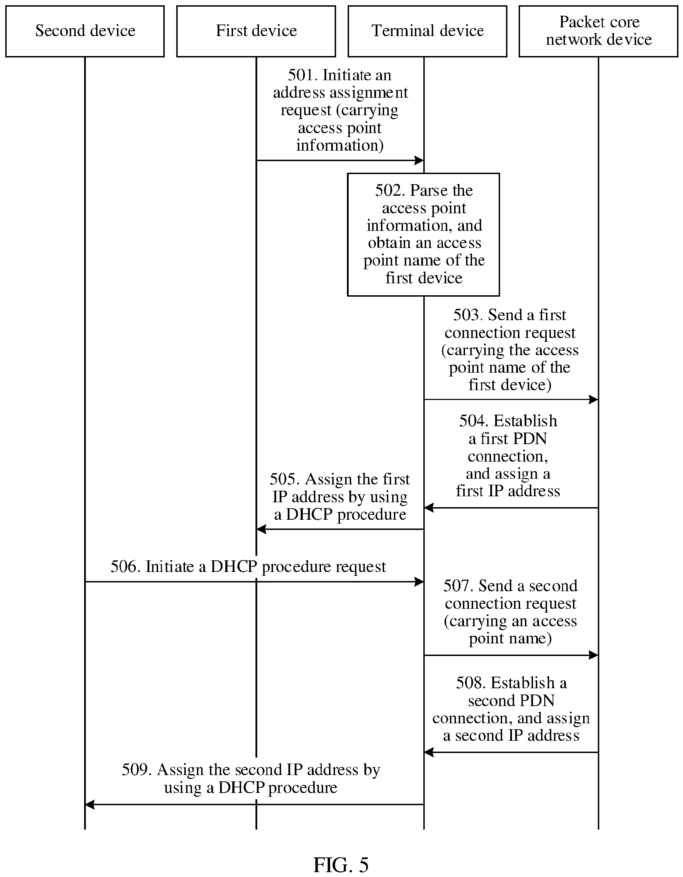

For better description, the following describes in detail the case in which the first device obtains the first IP address in the manner 2, and the case in which the second device obtains the second IP address in the manner in this example. For example, FIG. 5 is a schematic diagram of a scenario of another address assignment method according to an example. The example shown in FIG. 5 is not an embodiment of the present invention but helpful for understanding certain aspects thereof. In 501, the first device may initiate an address assignment request (for example, a DHCP discover packet) of the first device to a terminal device. The address assignment request may carry access point information of the first device. In 502, the terminal device may parse the access point information, and obtain an access point name of the first device. In 503, the terminal device may encapsulate the access point name of the first device into a first connection request, and send the first connection request to the packet core network device. In 504, the packet core network device may establish a first PDN connection based on the first connection request, and assign the first IP address based on the access point name of the first device. In 505, the terminal device may assign the first IP address to the first device by using a DHCP procedure.

It should be further noted that, for a specific implementation process of 506 to 509 shown in FIG. 5, refer to the descriptions of 406 to 409 in FIG. 4. Details are not described herein again.

It should be further noted that the access point information of the first device may be a message field in the address assignment request of the first device, and the message field may carry a character string. The access point name of the first device may be obtained by parsing the character string. The access point information of the first device may be, for example, a DHCP option (DHCP Option) message field, and the character string may be a default name (Domain Name) character string. Certainly, the foregoing manner is merely an example and is not exhaustive, and includes the foregoing optional manners.

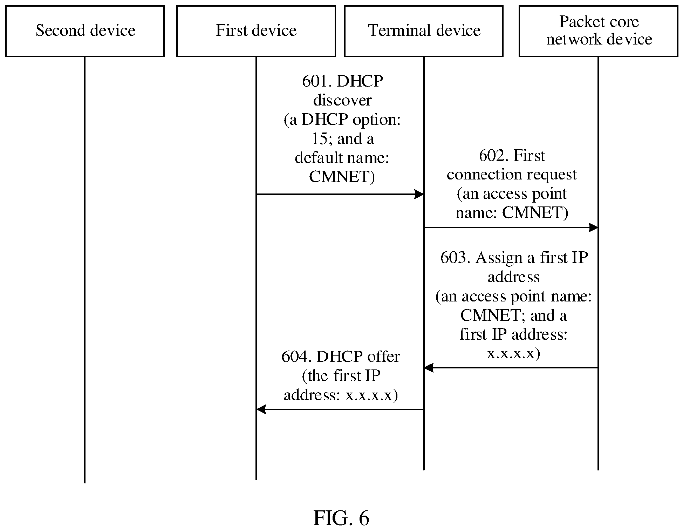

For example, as shown in FIG. 6, in 601, the first device sends the DHCP discover packet to the terminal device. The DHCP discover packet may carry the DHCP option message field. For example, the DHCP option (DHCP Option) message field is 15, and the DHCP option may include the default name (Domain Name) character string. For example, the domain name character string is CMNET. In 602, the terminal device may parse the domain name in the DHCP option, to obtain the access point name of the first device. For example, if information in the domain name is CMNET, the access point name obtained by the terminal device through parsing may be CMNET. Then, the terminal device may encapsulate the access point name CMNET into a first connection request, and send the second connection request to the packet core network.

In 603, the packet core network device may assign the first IP address x.x.x.x to the terminal device based on the access point name specified in 602, for example, CMNET. In 604, the terminal device may encapsulate the first IP address x.x.x.x into the DHCP discover packet, and send the DHCP discover packet to the first device.

It should be further noted that the address assignment manner shown in FIG. 6 is also applicable to address assignment for the second device.

It can be learned that, in this example, after assigning the first IP address to the first device, the terminal device may receive the address assignment request of the second device that is used to request the second IP address, send, to the packet core network device, the second connection request used to establish the second PDN connection, receive the second IP address assigned by the packet core network device in the second PDN connection, and assign the second IP address to the second device. When the terminal device has assigned an IP address to the first device, the terminal device can newly establish the second PDN connection to the packet core network device, and further assign an IP address to the second device based on the access point name notified by the second device, so that the IP addresses are respectively assigned to the first device and the second device, and it can be ensured that the first device and the second device normally function.

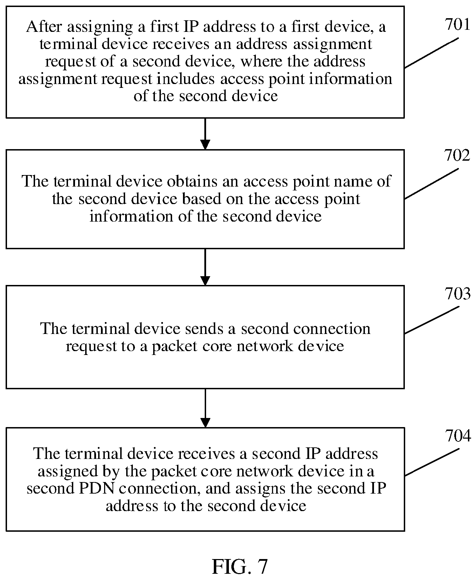

FIG. 7 is a schematic flowchart of another address assignment method according to an example. The example shown in FIG. 7 is not an embodiment of the present invention but helpful for understanding certain aspects thereof. As shown in FIG. 7, this example includes the following steps.

701. After assigning a first IP address to a first device, a terminal device receives an address assignment request of a second device. The address assignment request includes access point information of the second device.

It should be noted that the access point information of the second device may be a message field in the address assignment request of the second device, and the message field may carry a character string. The character string may indicate an access point name of the second device. The access point information of the second device may be, for example, a DHCP option message field, and the character string may be a domain name character string. Certainly, the foregoing manner is merely an example and is not exhaustive, and includes the foregoing optional manners.

702. The terminal device obtains the access point name of the second device based on the access point information of the second device.

It should be noted that the terminal device may parse the access point information of the second device, to obtain the access point name of the second device.

It should be further noted that the access point name of the second device may identify a service type requested by a second device. Specifically, one IP address may be requested in each PDN connection. The IP address may be used for a specific service type, and the IP address may belong to a specific network domain.

In some feasible implementations, the access point information of the second device may be a message field in the address assignment request of the second device, and the message field may carry a character string. The access point name of the second device may be obtained by parsing the character string. The access point information of the second device may be, for example, a DHCP option (DHCP Option) message field, and the character string may be a default name (Domain Name) character string. For example, a specific form of the access point information of the second device may be the access point information shown in 601 in FIG. 6. Certainly, the foregoing manner is merely an example and is not exhaustive, and includes the foregoing optional manners.

703. The terminal device sends a second connection request to a packet core network device.

The second connection request is used to establish a second PDN connection. The second PDN connection may be a non-default PDN connection, and the second PDN connection is different from a first PDN connection.

It should be noted that the second connection request may carry the access point name of the second device that is obtained by parsing the access point information.

During specific implementation, the terminal device may encapsulate the access point name of the second device into the second connection request, and send the second connection request to the packet core network device.

704. The terminal device receives a second IP address assigned by the packet core network device in the second PDN connection, and assigns the second IP address to the second device.

In some feasible implementations, the packet core network device may establish the second PDN connection when receiving the second connection request, determine, based on the access point name of the second device in the second connection request, a network domain corresponding to the service type requested by the second device, and assign the second IP address to the terminal device in the corresponding network domain.

It should be further noted that the terminal device further needs to assign the first IP address to the first device, and after assigning the first IP address to the first device, the terminal device may perform the method shown in 701 to 704.

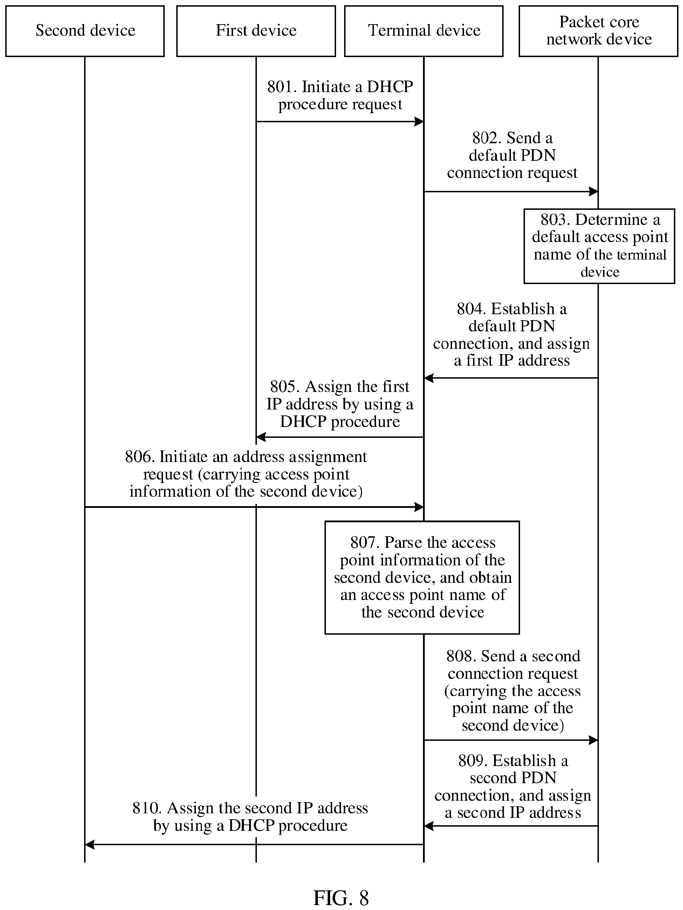

For better description, the following describes in detail the case in which the first device obtains the first IP address in the manner shown in FIG. 2, and the case in which the second device obtains the second IP address in the manner in this example. For example, FIG. 8 is a schematic diagram of a scenario of yet another address assignment method according to an example. The example shown in FIG. 8 is not an embodiment of the present invention but helpful for understanding certain aspects thereof. As shown in FIG. 8, in 801, the first device initiates a DHCP procedure request to a terminal device. The DHCP procedure request may carry no access point name. In 802, the terminal device may send a default PDN connection request to a packet core network device. In 803, the packet core network device may determine a default access point name of the terminal device based on registration information of the terminal device. In 804, the packet core network device establishes a default PDN connection, and assigns the first IP address to the terminal device based on the default access point name. In 805, the terminal device may assign the first IP address by using a DHCP procedure.

A sequence of steps 801 to 805 shown in FIG. 8 is not limited in this example. For example, the sequence of the steps may be that 801 to 805 are successively performed, or may be that 802 to 804 are performed before 801 and 805.

It should be further noted that, for a specific implementation process of 801 to 805 in FIG. 8, refer to the descriptions of 201 to 205 shown in FIG. 2. Details are not described herein again.

Further, in 806, the second device initiates an address assignment request (for example, a DHCP discover packet) of the second device to the terminal device. The address assignment request carries access point information of the second device. In 807, the terminal device parses the access point information of the second device, and obtains an access point name of the second device. In 808, the terminal device encapsulates the access point name of the second device into a second connection request, and sends the second connection request to the packet core network device. In 809, the packet core network device establishes a second PDN connection based on the second connection request, and assigns the second IP address based on the access point name of the second device. In 810, the terminal device assigns the second IP address to the second device by using a DHCP procedure (which may be, for example, a DHCP offer packet).

In some feasible implementations, the terminal device may alternatively assign the first IP address to the first device in a manner 2, including: receiving an address assignment request of the first device, where the address assignment request of the first device includes access point information of the first device; obtaining an access point name of the first device based on the access point information of the first device; sending a first connection request to the packet core network device, where the first connection request is used to establish a first PDN connection; receiving a first IP address assigned by the packet core network device in the first PDN connection; and assigning the first IP address to the first device.

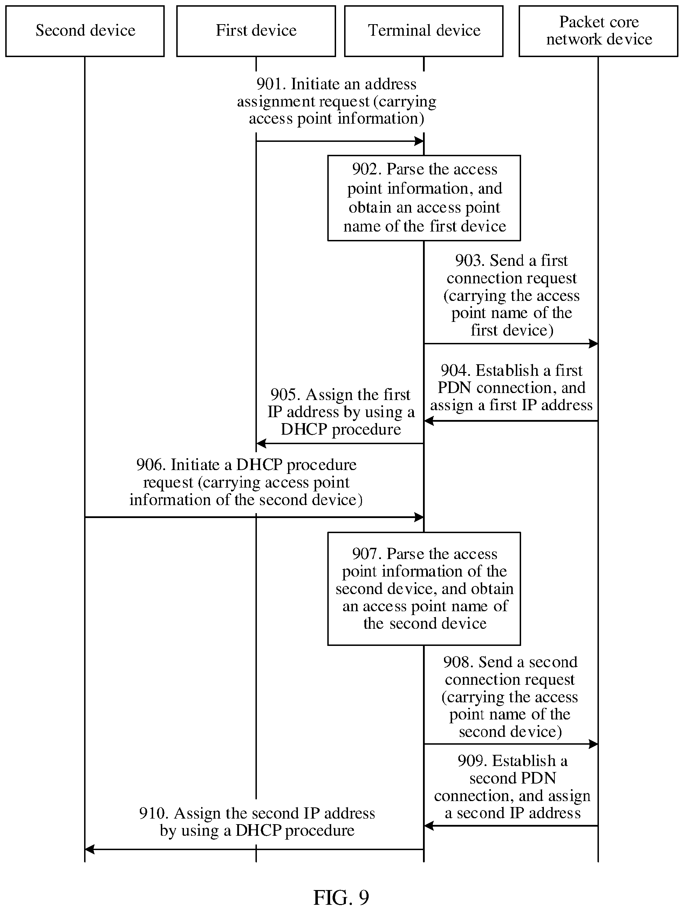

For better description, the following describes in detail the case in which the first device obtains the first IP address in the manner 2, and the case in which the second device obtains the second IP address in the manner in this embodiment of this application. For example, FIG. 9 is a schematic diagram of a scenario of yet another address assignment method according to an embodiment of this application. In 901, the first device initiates an address assignment request (for example, a DHCP discover packet) of the first device to a terminal device. The address assignment request carries access point information of the first device. In 902, the terminal device parses the access point information, and obtains an access point name of the first device. In 903, the terminal device encapsulates the access point name of the first device into a first connection request, and sends the first connection request to the packet core network device. In 904, the packet core network device establishes a first PDN connection based on the first connection request, and assigns the first IP address based on the access point name of the first device. In 905, the terminal device assigns the first IP address to the first device by using a DHCP procedure.

For a specific implementation process of 901 to 905 in FIG. 9, refer to the description of FIG. 6 and the descriptions of 501 to 505 shown in FIG. 5. Details are not described herein again.

Further, for a specific implementation process of 906 to 910 in FIG. 9, refer to the descriptions of 806 to 810 shown in FIG. 8. Details are not described herein again.

It can be learned that, in this embodiment of this application, after assigning the first IP address to the first device, the terminal device may receive the address assignment request of the second device that is used to request the second IP address, where the address assignment request includes the access point information of the second device, obtain the access point name of the second device based on the access point information of the second device, send, to the packet core network device, the second connection request that carries the access point name of the second device, receive the second IP address assigned by the packet core network device in the second PDN connection, and assign the second IP address to the second device. When the terminal device has assigned an IP address to the first device, the terminal device can newly establish the second PDN connection to the packet core network device, and further assign an IP address to the second device based on the access point name of the second device, so that the second IP address can be more accurately assigned, and it can be ensured that the IP addresses are respectively assigned to the first device and the second device, and the first device and the second device normally function.

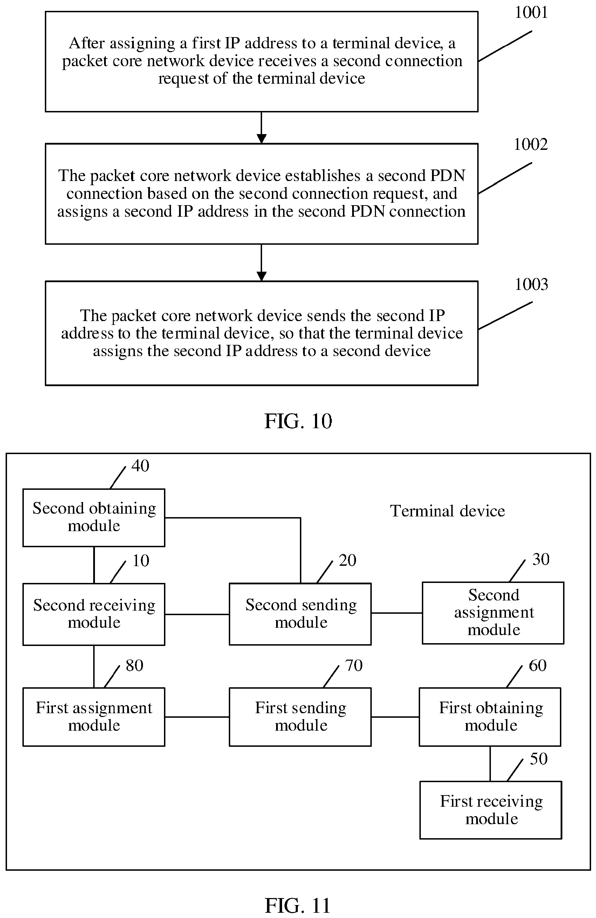

FIG. 10 is a schematic flowchart of still another address assignment method according to an example. The example shown in FIG. 10 is not an embodiment of the present invention but helpful for understanding certain aspects thereof. As shown in FIG. 10, this example includes the following steps.

1001. After assigning a first IP address to a terminal device, a packet core network device receives a second connection request of the terminal device.

The second connection request is used to establish a second PDN connection.

It should be noted that the second PDN connection may be a non-default PDN connection. In other words, the packet core network device may newly establish the second PDN connection to the terminal device, to assign a second IP address.

The terminal device may send a plurality of second connection requests, and each second connection request is used to establish one second PDN connection.

In some feasible implementations, the second connection request carries an access point name, and the access point name is used to identify a requested service type. The method further includes: assigning the second IP address based on the access point name.

The access point name is used to identify the requested service type.

The access point name may be an access point name of the terminal device, and the access point name of the terminal device may include a default access point name of the terminal device. Alternatively, the access point name may be an access point name of a second device, and is sent by the terminal device. Alternatively, the access point name may be another access point name sent by the terminal device.

In some feasible implementations, the access point name includes the default access point name of the terminal device. The assigning the second IP address based on the access point name includes: assigning the second IP address based on the default access point name of the terminal device.

It should be noted that, when being to initially assign the first IP address to the terminal device, the packet core network device may assign the first IP address based on the default access point name. When further assigning the second IP address to the terminal device, if the second connection request carries the default access point name, it can be ensured that the first IP address and the second IP address are in a same network domain. 1002. The packet core network device establishes the second PDN connection based on the second connection request, and assigns the second IP address in the second PDN connection.

During specific implementation, the packet core network device may assign the second IP address in the second PDN connection based on the access point name in the second connection request. For example, the access point name is CMNET. The packet core network device determines that the requested service type may be internet access, and may use an IP address in a network domain of the internet access as the second IP address.

1003. The packet core network device sends the second IP address to the terminal device, so that the terminal device assigns the second IP address to the second device. It should be noted that, after obtaining the second IP address, the packet core network sends the second IP address to the terminal device. The terminal device may receive the second IP address, and assign the second IP address to the second device, so that the second device can implement functions such as network access and communication by using the second IP address.

In some feasible implementations, before the packet core network device assigns the first IP address to the terminal device, the method further includes: receiving a first connection request of the terminal device, where the first connection request carries an access point name of a first device; establishing a first PDN connection based on the first connection request, and assigning the first IP address in the first PDN connection based on the access point name of the first device; and assigning the first IP address to the terminal device, so that the terminal device assigns the first IP address to the first device.

For example, for a manner of assigning the first IP address to the terminal device, refer to the description of FIG. 6 and the descriptions of 501 to 505 shown in FIG. 5. Details are not described herein again.

In some feasible implementations, the manner of assigning the first IP address to the terminal device may alternatively be the manner shown in FIG. 2. For a specific implementation process, refer to the descriptions of 201 to 205 shown in FIG. 2. Details are not described herein again.

It should be further noted that, for a detailed implementation process in which the packet core network device assigns the second IP address to the terminal device, refer to the descriptions of the packet core network device in FIG. 9 in the foregoing embodiment. Details are not described herein again.

It can be learned that, in this example, after assigning the first IP address to the terminal device, the packet core network device receives the second connection request of the terminal device, establishes the second PDN connection based on the second connection request, assigns the second IP address in the second PDN connection, and sends the second IP address to the terminal device, so that the terminal device assigns the second IP address to the second device. When the packet core network device has assigned an IP address to the terminal device, the packet core network device can newly establish the second PDN connection, and further assign an IP address to the terminal device based on the access point name notified by the terminal device, so that the terminal device can obtain two or more IP addresses, and the terminal device can assign these IP addresses to devices connected to the terminal device. In this way, it is ensured that these devices normally function.

The method in the embodiments of the present invention is described above in detail. To help better implement the foregoing solutions of the embodiments of the present invention, the following correspondingly describes corresponding apparatus implementations.

FIG. 11 is a schematic structural diagram of a terminal device according to an example. The terminal device shown in FIG. 11 may include:
a second receiving module 10, configured to: after a first IP address is assigned to a first device, receive an address assignment request of a second device, where the address assignment request of the second device is used to request a second IP address;
a second sending module 20, configured to send a second connection request to a packet core network device, where the second connection request is used to establish a second PDN connection, where
the second receiving module 10 is further configured to receive a second IP address assigned by the packet core network device in the second PDN connection; and
a second assignment module 30, configured to assign the second IP address to the second device.

In an example, the second connection request carries an access point name, and the packet core network device assigns the second IP address based on the access point name. The access point name is used to identify a requested service type.

In an example, the address assignment request further includes access point information of the second device, and the terminal device further includes:
a second obtaining module 40, configured to obtain an access point name of
the second device based on the access point information of the second device. In an example, the access point name includes a default access point name of the terminal device.

The second IP address is assigned by the packet core network device based on the default access point name of the terminal device.

In an example, the terminal device further includes: a first receiving module 50, configured to receive an address assignment request of the first device, where the address assignment request of the first device includes access point information of the first device;
a first obtaining module 60, configured to obtain an access point name of the first device based on the access point information of the first device;
a first sending module 70, configured to send a first connection request to the packet core network device, where the first connection request is used to establish a first PDN connection, where
the first receiving module 50 is further configured to receive a first IP address assigned by the packet core network device in the first PDN connection; and
a first assignment module 80, configured to assign the first IP address to the first device.

It can be learned that, in this example, after assigning the first IP address to the first device, the terminal device may receive the address assignment request of the second device that is used to request the second IP address, send, to the packet core network device, the second connection request used to establish the second PDN connection, receive the second IP address assigned by the packet core network device in the second PDN connection, and assign the second IP address to the second device. When the terminal device has assigned an IP address to the first device, the terminal device can newly establish the second PDN connection to the packet core network device, and further assign an IP address to the second device based on the access point name notified by the second device, so that the IP addresses are respectively assigned to the first device and the second device, and it can be ensured that the first device and the second device normally function.

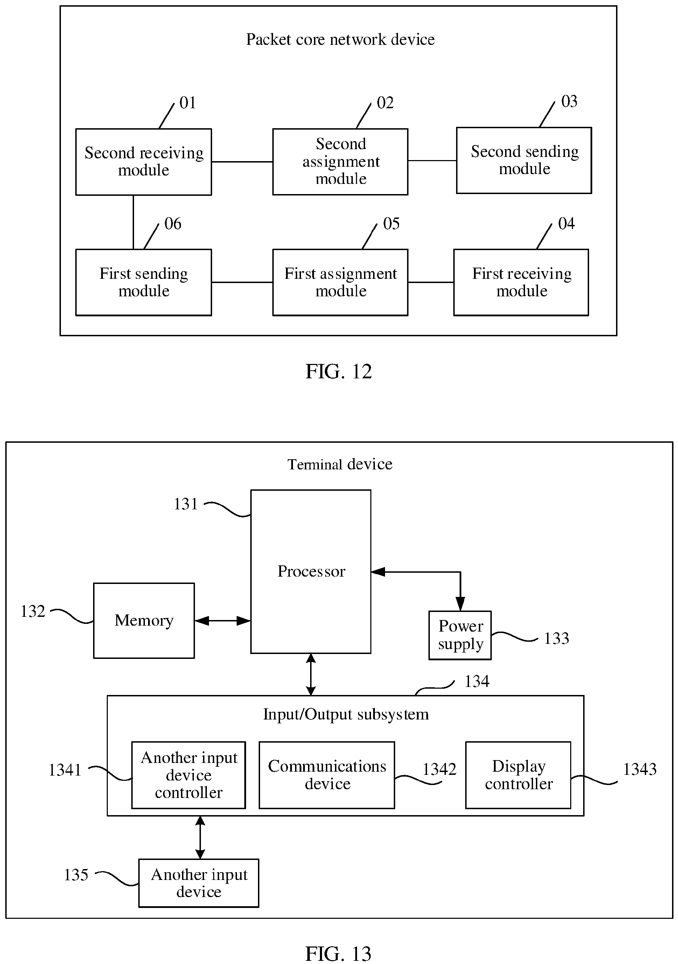

FIG. 12 is a schematic structural diagram of a packet core network device according to an example. The packet core network device shown in FIG. 12 may include:
a second receiving module 01, configured to: after a first IP address is assigned to a terminal device, receive a second connection request of the terminal device;
a second assignment module 02, configured to: establish a second PDN connection based on the second connection request, and assign a second IP address in the second PDN connection; and
a second sending module 03, configured to send the second IP address to the terminal device, so that the terminal device assigns the second IP address to a second device.

In an example, the second connection request carries an access point name, and the access point name is used to identify a requested service type.

The second assignment module 02 is further configured to assign the second IP address based on the access point name.

In an example, the access point name includes a default access point name of the terminal device.

The second assignment module 02 is specifically configured to assign the second IP address based on the default access point name of the terminal device.

In an example, the packet core network device further includes a first receiving module 04, configured to receive a first connection request of the terminal device, where the first connection request carries an access point name of a first device;
a first assignment module 05, configured to: establish a first PDN connection based on the first connection request, and assign the first IP address in the first PDN connection based on the access point name of the first device; and
a first sending module 06, configured to send the first IP address to the terminal device, so that the terminal device assigns the first IP address to the first device.

It can be learned that, in this example, after assigning the first IP address to the terminal device, the packet core network device receives the second connection request of the terminal device, establishes the second PDN connection based on the second connection request, assigns the second IP address in the second PDN connection, and sends the second IP address to the terminal device, so that the terminal device assigns the second IP address to the second device. When the packet core network device has assigned an IP address to the terminal device, the packet core network device can newly establish the second PDN connection, and further assign an IP address to the terminal device based on the access point name notified by the terminal device, so that the terminal device can obtain two or more IP addresses, and the terminal device can assign these IP addresses to devices connected to the terminal device. In this way, it is ensured that these devices normally function.

FIG. 13 is a schematic structural diagram of another terminal device according to an example. The terminal device described in this example includes components such as a memory 132, another input device 135, a display, an input/output subsystem 134, a processor 131, and a power supply 133. A person skilled in the art may understand that the structure of the terminal device that is shown in FIG. 13 constitutes no limitation on the terminal device, and may include more or fewer components than those shown in the figure, or combine some components, or split some components, or have different component arrangements.

The following specifically describes the components in the terminal device with reference to FIG. 13.

The memory 132 may be configured to store a software program and a module. There may be at least two memories 132, which are heterogeneous memories 132. The heterogeneity means that storage media are different. The processor 131 performs various function applications of the terminal device and processes data by running the software program and the module that are stored in the memory 132. The memory 132 may mainly include a program storage area and a data storage area. The program storage area may store an operating system, an application program required by at least one function, and the like. The data storage area may store data created according to use of the terminal, and the like.

The another input device 135 may be configured to: receive input digit or character information, and generate a key signal input related to user settings and function control. Specifically, the another input device 135 may include one or more of a physical keyboard, a mouse, a joystick, an optical mouse (the optical mouse is a touch-sensitive surface that does not display a visual output, or an extension of a touch-sensitive surface including a touchscreen), and the like. The another input device 135 is connected to another input device controller 1341 of the input/output subsystem 134, and exchanges a signal with the processor 131 under control of the another input device controller. The input/output subsystem 134 is configured to control an external input/output device, and may include the another input device controller, a communications device 1342, and a display controller 1343. Optionally, one or more another input control device controllers receive a signal from the another input device 135 and/or send a signal to the another input device 135. The another input device 135 may include a physical button (a pressing button, a rocker button, or the like), a joystick, a click scroll wheel, an optical mouse (the optical mouse is a touch-sensitive surface that does not display a visual output, or an extension of a touch-sensitive surface including a touchscreen), and the like. It should be noted that the another input control device controller may be connected to any one or more of the foregoing devices. The display controller 1343 in the input/output subsystem 134 receives a signal from the display and/or sends a signal to the display.

The processor 131 is a control center of the terminal device, connects all the components of the entire terminal by using various interfaces and lines, and performs various functions of the terminal device and processes data by running or executing the software program and/or the module that are/is stored in the memory 132 and by invoking the data stored in the memory 132, to perform overall monitoring on the terminal device. Optionally, the processor 131 may include one or more processing units. Preferably, an application processor 131 and a modem processor 131 may be integrated into the processor 131. The application processor 131 mainly processes an operating system, an application program, and the like. The modem processor 131 mainly processes wireless communication. It may be understood that the modem processor 131 may alternatively not be integrated into the processor 131.

The terminal device further includes the power supply 133 (for example, a battery) that supplies power to the components. Preferably, the power supply 133 may be logically connected to the processor 131 by using a power supply management system, so as to implement functions such as charge management, discharge management, and power consumption management by using the power supply management system.

Specifically, the processor 131 may invoke a program instruction stored in the memory 132, to implement the method described in the embodiments of the present invention. Specifically, the processor 131 invokes the program instruction stored in the memory 132 to perform the following steps:
after a first IP address is assigned to a first device, receiving an address assignment request of a second device, where the address assignment request of the second device is used to request a second IP address;
sending a second connection request to a packet core network device, where the second connection request is used to establish a second PDN connection; and
receiving a second IP address assigned by the packet core network device in the second PDN connection, and assigning the second IP address to the second device.

The method performed by the processor in this example is described from a perspective of the processor. It may be understood that, in this example, the processor needs to cooperate with another hardware structure to perform the foregoing method. For example, the processor 131 may control the communications device and execute the program stored in the memory 132, so that the terminal device can interact with another device or server to receive the address assignment request of the second device, send the second connection request to the packet core network device, and receive the second IP address assigned by the packet core network device in the second PDN connection. Optionally, the terminal device may implement, by using the processor and another device, corresponding steps performed by the terminal device in the address assignment method in the foregoing method embodiments. It should be understood that this embodiment of the present invention is an entity apparatus embodiment corresponding to the method embodiments, and descriptions of the method embodiments are also applicable to this embodiment of the present invention.

Another example provides a terminal device readable storage medium. The terminal device readable storage medium stores a program, and when the program is executed by a processor, the following steps may be implemented: after a first IP address is assigned to a first device, receiving an address assignment request of a second device, where the address assignment request of the second device is used to request a second IP address; sending a second connection request to a packet core network device, where the second connection request is used to establish a second PDN connection; and receiving a second IP address assigned by the packet core network device in the second PDN connection, and assigning the second IP address to the second device.

It should be noted that, for a specific process in which the terminal device readable storage medium is executed by the processor, refer to the method described in the foregoing method embodiments. Details are not described herein again.

Still another embodiment of the present invention further provides a terminal device program product including an instruction. When the terminal device program product is run on a terminal device, the terminal device is enabled to perform the method in the foregoing method embodiments.

The terminal device readable storage medium may be an internal storage unit of the terminal described in any one of the foregoing implementations, for example, a hard disk or memory of the terminal. The terminal device readable storage medium may alternatively be an external storage device of the terminal device, for example, a removable hard disk, a smart media card (Smart Media Card, SMC), a secure digital (Secure Digital, SD) card, a flash card (Flash Card), or the like that is provided on the terminal device. Further, the terminal device readable storage medium may alternatively include both an internal storage unit and an external storage device of the terminal. The terminal device readable storage medium is configured to store the program and other programs and data required by the terminal. The terminal device readable storage medium may be further configured to temporarily store data that has been output or data that is to be output.

Based on a same inventive concept, a problem-resolving principle of the terminal device provided in this example is similar to that of the method embodiment of the present invention. Therefore, for implementation of the terminal device, refer to the implementation of the method. For brevity of description, details are not described herein again.

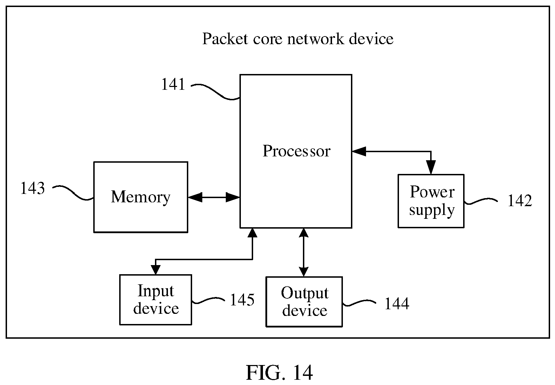

FIG. 14 is a schematic structural diagram of another packet core network device according to an example. The packet core network device described in this example includes a processor 141, a power supply 142, a memory 143, an input device 145, and an output device 144.

The processor 141 may be a central processing unit (Central Processing Unit, CPU), or the processor 141 may be another general-purpose processor 141, a digital signal processor (Digital Signal Processor, DSP) 141, an application-specific integrated circuit (Application Specific Integrated Circuit, ASIC), a field-programmable gate array (Field-Programmable Gate Array, FPGA) or another programmable logic device, a discrete gate or transistor logic device, a discrete hardware component, or the like. The general-purpose processor 141 may be a microprocessor 141, or the processor 141 may be any conventional processor 141 or the like.

The input device 145 may include a touchpad, a fingerprint collection sensor (configured to collect fingerprint information of a user and direction information of a fingerprint), a microphone, and the like. The output device 144 may include a display (an LCD or the like), a speaker, and the like.

The memory 143 may include a read-only memory 143 and a random access memory 143, and provide an instruction and data for the processor 141. A part of the memory 143 may further include a non-volatile random access memory 143.

Specifically, the processor 141 invokes the program instruction stored in the memory 143, to perform the following steps:
after a first IP address is assigned to a terminal device, receiving a second connection request of the terminal device;
establishing a second PDN connection based on the second connection request, and assigning a second IP address in the second PDN connection; and
sending the second IP address to the terminal device, so that the terminal device assigns the second IP address to a second device.

The method performed by the processor 141 in this example is described from a perspective of the processor 141. It may be understood that, in this example, the processor 141 needs to cooperate with another hardware structure to perform the foregoing method. For example, the processor 141 may control the communications device to receive the second connection request of the terminal device, and send the second IP address to the terminal device. The processor 141 may invoke the program stored in the memory 143 to establish the second PDN connection based on the second connection request, and assign the second IP address in the second PDN connection. Optionally, the packet core network device may implement, by using the processor 141 and another device, corresponding steps performed by the packet core network device in the address assignment method in the foregoing method embodiments. It should be understood that this example is an entity apparatus embodiment corresponding to the method embodiments, and descriptions of the method embodiments are also applicable to this embodiment of the present invention.

Another example provides a packet core network device readable storage medium. The packet core network device readable storage medium stores a program, and when the program is executed by the processor 141, the following steps may be implemented: after a first IP address is assigned to a terminal device, receiving a second connection request of the terminal device; establishing a second PDN connection based on the second connection request, and assigning a second IP address in the second PDN connection; and sending the second IP address to the terminal device, so that the terminal device assigns the second IP address to a second device.

It should be noted that, for a specific process in which the packet core network device readable storage medium is executed by the processor 141, refer to the method

described in the foregoing method embodiments. Details are not described herein again. Still another example further provides a packet core network device program product including an instruction. When the packet core network device program product is run on a packet core network device, the packet core network device is enabled to perform the method in the foregoing method embodiments.

The packet core network device readable storage medium may be an internal storage unit of the packet core network device described in any one of the foregoing implementations, for example, a hard disk or memory of the packet core network device. The packet core network device readable storage medium may alternatively be an external storage device of the packet core network device, for example, a removable hard disk, a smart media card (Smart Media Card, SMC), a secure digital (Secure Digital, SD) card, a flash card (Flash Card), or the like that is provided on the packet core network device. Further, the packet core network device readable storage medium may alternatively include both an internal storage unit and an external storage device of the packet core network device. The packet core network device readable storage medium is configured to store the program and other programs and data required by the packet core network device. The packet core network device readable storage medium may be further configured to temporarily store data that has been output or data that is to be output.

Based on a same inventive concept, a problem-resolving principle of the packet core network device provided in this example is similar to that of the method embodiment of the present invention. Therefore, for implementation of the packet core network device, refer to the implementation of the method. For brevity of description, details are not described herein again.

## Claims

1. An address assignment method for a mobile communications system, wherein the method is applied to a terminal device, and comprises:
receiving (901) an address assignment request of a first device, wherein the address assignment request of the first device comprises access point information of the first device;
parsing (902) the access point information and obtaining (902) an access point name of the first device based on the access point information of the first device;
encapsulating (903) the access point name of the first device into a first connection request;
sending (903) the first connection request to a packet core network device, wherein the first connection request is used to establish a first packet data network, further referred as first PDN, connection;
receiving (904) a first IP address assigned by the packet core network device in the first PDN connection;
assigning (905) the first IP address to the first device;
after assigning (905) the first IP address to the first device, receiving (906) an address assignment request of a second device, wherein the address assignment request of the second device is used to request a second IP address;
sending (908) a second connection request to the packet core network device, wherein the second connection request is used to establish a second PDN connection;
receiving (909) the second IP address; and
assigning (910) the second IP address to the second device;
**characterized in that** the second connection request carries an access point name of the second device;
the access point name of the second device is used to identify a requested service type;
the second IP address is assigned by the packet core network device in the second PDN connection based on the access point name of the second device;
the address assignment request of the second device further comprises access point information of the second device; and
the method further comprises obtaining (907) the access point name of the second device based on the access point information of the second device.

2. An address assignment method for a mobile communications system, wherein the method is applied to a packet core network device, and comprises:
receiving (903) a first connection request of a terminal device, wherein the first connection request carries an access point name of a first device, wherein the access point name of the first device is obtained by the terminal device based on access point information of the first device, wherein the access point information of the first device is carried in an address assignment request of the first device, and wherein the address assignment request of the first device is received by the terminal device;
establishing (904) a first packet data network, further referred as first PDN, connection based on the first connection request, and assigning (904) a first IP address in the first PDN connection based on the access point name of the first device;
sending (905) the first IP address to the terminal device, so that the terminal device assigns the first IP address to the first device;
after assigning (904) the first IP address to the terminal device, receiving (908) a second connection request of the terminal device;
establishing (909) a second PDN connection based on the second connection request;
assigning (909) a second IP address in the second PDN connection; and
sending (909) the second IP address to the terminal device for assigning the second IP address to a second device;
**characterized in that** the second connection request carries an access point name of the second device, wherein the access point name of the second device is obtained by the terminal device based on access point information of the second device, wherein the access point information of the second device is carried in an address assignment request of the second device, and wherein the address assignment request of the second device is received by the terminal device;
the access point name of the second device is used to identify a requested service type; and
the second IP address is assigned in the second PDN connection based on the access point name of the second device.

3. A terminal device, wherein the terminal device comprises:
a memory (132), configured to store one or more programs; and
a processor (131), configured to execute the program in the memory (132), so that the terminal device performs the method according to claim 1.

4. A packet core network device, wherein the packet core network device comprises:
a memory (143), configured to store one or more programs; and
a processor (141), configured to execute the program in the memory, to implement the method according to claim 2.

5. A computer readable storage medium, wherein the computer readable storage medium stores a computer program, the computer program comprises a program instruction, and when the program instruction is run on a computer, the computer is enabled to perform the method according to claim 1.

6. A computer readable storage medium, wherein the computer readable storage medium stores a computer program, the computer program comprises a program instruction, and when the program instruction is run on a computer, the computer is enabled to perform the method according to claim 2.

7. A computer program product comprising an instruction, wherein when the computer program product is run on a computer, the computer is enabled to perform the method according to claim 1.

8. A computer program product comprising an instruction, wherein when the computer program product is run on a computer, the computer is enabled to perform the method according to claim 2.

## Patentansprüche

1. Adresszuweisungsverfahren für ein mobiles Kommunikationssystem, wobei das Verfahren auf eine Endgerätvorrichtung angewendet wird und Folgendes umfasst:
Empfangen (901) einer Adresszuweisungsanforderung einer ersten Vorrichtung, wobei die Adresszuweisungsanforderung der ersten Vorrichtung Zugangspunktinformationen der ersten Vorrichtung umfasst;
Parsen (902) der Zugangspunktinformationen und Erhalten (902) eines Zugangspunktnamens der ersten Vorrichtung basierend auf den Zugangspunktinformationen der ersten Vorrichtung;
Kapseln (903) des Zugangspunktnamens der ersten Vorrichtung in eine erste Verbindungsanforderung;
Senden (903) der ersten Verbindungsanforderung an eine Paketkernnetzwerkvorrichtung, wobei die erste Verbindungsanforderung verwendet wird, um ein erstes Paketdatennetzwerk zu errichten, im Weiteren bezeichnet als erste PDN-Verbindung;
Empfangen (904) einer ersten IP-Adresse, zugewiesen durch die Paketkernnetzwerkvorrichtung in der ersten PDN-Verbindung;
Zuweisen (905) der ersten IP-Adresse zur ersten Vorrichtung;
nach dem Zuweisen (905) der ersten IP-Adresse zur ersten Vorrichtung, Empfangen (906) einer Adresszuweisungsanforderung einer zweiten Vorrichtung, wobei die Adresszuweisungsanforderung der zweiten Vorrichtung verwendet wird, um eine zweite IP-Adresse anzufordern;
Senden (908) einer zweiten Verbindungsanforderung an die Paketkernnetzwerkvorrichtung, wobei die zweite Verbindungsanforderung verwendet wird, um eine zweite PDN-Verbindung zu errichten;
Empfangen (909) der zweiten IP-Adresse; und
Zuweisen (910) der zweiten IP-Adresse zur zweiten Vorrichtung;
**dadurch gekennzeichnet, dass** die zweite Verbindungsanforderung einen Zugangspunktnamen der zweiten Vorrichtung trägt;
wobei der Zugangspunktname der zweiten Vorrichtung verwendet wird zum Identifizieren eines angeforderten Diensttyps;
wobei die zweite IP-Adresse durch die Paketkernnetzwerkvorrichtung in der zweiten PDN-Verbindung zugewiesen wird, basierend auf dem Zugangspunktnamen der zweiten Vorrichtung;
wobei die Adresszuweisungsanforderung der zweiten Vorrichtung ferner Zugangspunktinformationen der zweiten Vorrichtung umfasst; und
wobei das Verfahren ferner Erhalten (907) des Zugangspunktnamens der zweiten Vorrichtung basierend auf den Zugangspunktinformationen der zweiten Vorrichtung umfasst.

2. Adresszuweisungsverfahren für ein mobiles Kommunikationssystem, wobei das Verfahren auf eine Paketkernnetzwerkvorrichtung angewendet wird und Folgendes umfasst:
Empfangen (903) einer ersten Verbindungsanforderung einer Endgerätvorrichtung, wobei die erste Verbindungsanforderung einen Zugangspunktnamen einer ersten Vorrichtung trägt, wobei der Zugangspunktname der ersten Vorrichtung durch die Endgerätvorrichtung erhalten wird, basierend auf Zugangspunktinformationen der ersten Vorrichtung, wobei die Zugangspunktinformationen der ersten Vorrichtung in einer Adresszuweisungsanforderung der ersten Vorrichtung getragen werden, und wobei die Adresszuweisungsanforderung der ersten Vorrichtung durch die Endgerätvorrichtung empfangen wird;
Errichten (904) einer ersten Paketdatennetzwerkverbindung, im Weiteren bezeichnet als erste PDN-Verbindung, basierend auf der ersten Verbindungsanforderung, und Zuweisen (904) einer ersten IP-Adresse in der ersten PDN-Verbindung basierend auf dem Zugangspunktnamen der ersten Vorrichtung;
Senden (905) der ersten IP-Adresse an die Endgerätvorrichtung, sodass die Endgerätvorrichtung die erste IP-Adresse zur ersten Vorrichtung zuweist;
nach Zuweisen (904) der ersten IP-Adresse zur Endgerätvorrichtung, Empfangen (908) einer zweiten Verbindungsanforderung der Endgerätvorrichtung;
Errichten (909) einer zweiten PDN-Verbindung basierend auf der zweiten Verbindungsanforderung;
Zuweisen (909) einer zweiten IP-Adresse in der zweiten PDN-Verbindung; und
Senden (909) der zweiten IP-Adresse an die Endgerätvorrichtung zum Zuweisen der zweiten IP-Adresse zu einer zweiten Vorrichtung;
**dadurch gekennzeichnet, dass** die zweite Verbindungsanforderung einen Zugangspunktnamen der zweiten Vorrichtung trägt, wobei der Zugangspunktname der zweiten Vorrichtung durch die Endgerätvorrichtung erhalten wird, basierend auf Zugangspunktinformationen der zweiten Vorrichtung, wobei die Zugangspunktinformationen der zweiten Vorrichtung in einer Adresszuweisungsanforderung der zweiten Vorrichtung getragen werden, und wobei die Adresszuweisungsanforderung der zweiten Vorrichtung durch die Endgerätvorrichtung empfangen wird;
wobei der Zugangspunktname der zweiten Vorrichtung verwendet wird zum Identifizieren eines angeforderten Diensttyps; und
wobei die zweite IP-Adresse in der zweiten PDN-Verbindung zugewiesen wird, basierend auf dem Zugangspunktnamen der zweiten Vorrichtung.

3. Endgerätvorrichtung, wobei die Endgerätvorrichtung Folgendes umfasst:
einen Speicher (132), ausgelegt zum Speichern eines oder mehrerer Programme; und
einen Prozessor (131), ausgelegt zum Ausführen des Programms im Speicher (132), sodass die Endgerätvorrichtung das Verfahren nach Anspruch 1 durchführt.

4. Paketkernnetzwerkvorrichtung, wobei die Paketkernnetzwerkvorrichtung Folgendes umfasst:
einen Speicher (143), ausgelegt zum Speichern eines oder mehrerer Programme; und
einen Prozessor (141), ausgelegt zum Ausführen des Programms im Speicher, um das Verfahren nach Anspruch 2 zu implementieren.

5. Computerlesbares Speichermedium, wobei das computerlesbare Speichermedium ein Computerprogramm speichert, wobei das Computerprogramm eine Programmanweisung umfasst, und wobei, wenn die Programmanweisung auf einem Computer ausgeführt wird, der Computer in die Lage versetzt wird, das Verfahren nach Anspruch 1 durchzuführen.

6. Computerlesbares Speichermedium, wobei das computerlesbare Speichermedium ein Computerprogramm speichert, wobei das Computerprogramm eine Programmanweisung umfasst, und wobei, wenn die Programmanweisung auf einem Computer ausgeführt wird, der Computer in die Lage versetzt wird, das Verfahren nach Anspruch 2 durchzuführen.

7. Computerprogrammprodukt, umfassend eine Anweisung, wobei, wenn das Computerprogrammprodukt auf einem Computer ausgeführt wird, der Computer in die Lage versetzt wird, das Verfahren nach Anspruch 1 durchzuführen.

8. Computerprogrammprodukt, umfassend eine Anweisung, wobei, wenn das Computerprogrammprodukt auf einem Computer ausgeführt wird, der Computer in die Lage versetzt wird, das Verfahren nach Anspruch 2 durchzuführen.

## Revendications

1. Procédé d'attribution d'adresse destiné à un système de communication mobile, le procédé étant appliqué à un dispositif terminal, et comprenant :
la réception (901) d'une requête d'attribution d'adresse d'un premier dispositif, la requête d'attribution d'adresse du premier dispositif comprenant des informations de point d'accès du premier dispositif ;
l'analyse (902) des informations de point d'accès et l'obtention (902) d'un nom de point d'accès du premier dispositif sur la base des informations de point d'accès du premier dispositif ;
l'encapsulation (903) du nom de point d'accès du premier dispositif dans une première requête de connexion ;
l'envoi (903) de la première requête de connexion à un dispositif de réseau central de paquets, la première requête de connexion étant utilisée pour établir un premier réseau de données de paquets, auquel on se réfère en tant que première connexion PDN ;
la réception (904) d'une première adresse IP attribuée par le dispositif de réseau central de paquets dans la première connexion PDN ;
l'attribution (905) de la première adresse IP au premier dispositif ;
après l'attribution (905) de la première adresse IP au premier dispositif, la réception (906) d'une requête d'attribution d'adresse d'un deuxième dispositif, la requête d'attribution d'adresse du deuxième dispositif étant utilisée pour demander une deuxième adresse IP ;
l'envoi (908) d'une deuxième requête de connexion au dispositif de réseau central de paquets, la deuxième requête de connexion étant utilisée pour établir une deuxième connexion PDN ;
la réception (909) de la deuxième adresse IP ; et
l'attribution (910) de la deuxième adresse IP au deuxième dispositif ;
**caractérisé en ce que** la deuxième requête de connexion achemine un nom de point d'accès du deuxième dispositif ;
le nom de point d'accès du deuxième dispositif est utilisé pour identifier un type de service demandé ;
la deuxième adresse IP est attribuée par le dispositif de réseau central de paquets dans la deuxième connexion PDN sur la base du nom de point d'accès du deuxième dispositif ;
la requête d'attribution d'adresse du deuxième dispositif comprend en outre des informations de point d'accès du deuxième dispositif ; et
le procédé comprend en outre l'obtention (907) du nom de point d'accès du deuxième dispositif sur la base des informations de point d'accès du deuxième dispositif.

2. Procédé d'attribution d'adresse destiné à un système de communication mobile, le procédé étant appliqué à un dispositif de réseau central de paquets, et comprenant :
la réception (903) d'une première requête de connexion d'un dispositif terminal, la première requête de connexion acheminant un nom de point d'accès d'un premier dispositif, le nom de point d'accès du premier dispositif étant obtenu par le dispositif terminal sur la base d'informations de point d'accès du premier dispositif, les informations de point d'accès du premier dispositif étant acheminées dans une requête d'attribution d'adresse du premier dispositif, et la requête d'attribution d'adresse du premier dispositif étant reçue par le dispositif terminal ;
l'établissement (904) d'un premier réseau de données de paquets, auquel on se réfère en tant que première connexion PDN sur la base de la première requête de connexion, et l'attribution (904) d'une première adresse IP dans la première connexion PDN sur la base du nom de point d'accès du premier dispositif ;
l'envoi (905) de la première adresse IP au dispositif terminal, de sorte que le dispositif terminal attribue la première adresse IP au premier dispositif ;
après l'attribution (904) de la première adresse IP au dispositif terminal, la réception (908) d'une deuxième requête de connexion du dispositif terminal ;
l'établissement (909) d'une deuxième connexion PDN sur la base de la deuxième requête de connexion ;
l'attribution (909) d'une deuxième adresse IP dans la deuxième connexion PDN ; et
l'envoi (909) de la deuxième adresse IP au dispositif terminal pour attribuer la deuxième adresse IP à un deuxième dispositif ;
**caractérisé en ce que** la deuxième requête de connexion achemine un nom de point d'accès du deuxième dispositif, le nom de point d'accès du deuxième dispositif étant obtenu par le dispositif terminal sur la base des informations de point d'accès du deuxième dispositif, les informations de point d'accès du deuxième dispositif étant acheminées dans une requête d'attribution d'adresse du deuxième dispositif, la requête d'attribution d'adresse du deuxième dispositif étant reçue par le dispositif terminal;
le nom de point d'accès du deuxième dispositif est utilisé pour identifier un type de service demandé ; et
la deuxième adresse IP est attribuée dans la deuxième connexion PDN sur la base du nom de point d'accès du deuxième dispositif.

3. Dispositif terminal, le dispositif terminal comprenant :
une mémoire (132), configurée pour stocker un ou des programmes ; et
un processeur (131), configuré pour exécuter le programme dans la mémoire (132), de sorte que le dispositif terminal effectue le procédé selon la revendication 1.

4. Dispositif de réseau central de paquets, le dispositif de réseau central de paquets comprenant :
une mémoire (143), configurée pour stocker un ou des programmes ; et
un processeur (141), configuré pour exécuter le programme dans la mémoire, pour mettre en oeuvre le procédé selon la revendication 2.

5. Support de stockage lisible par ordinateur, le support de stockage lisible par ordinateur stockant un programme informatique, le programme informatique comprenant une instruction de programme, et lorsque l'instruction de programme est exécutée sur un ordinateur, l'ordinateur est activé pour effectuer le procédé selon la revendication 1.

6. Support de stockage lisible par ordinateur, le support de stockage lisible par ordinateur stockant un programme informatique, le programme informatique comprenant une instruction de programme, et lorsque l'instruction de programme est exécutée sur un ordinateur, l'ordinateur est activé pour effectuer le procédé selon la revendication 2.

7. Produit de programme informatique comprenant une instruction, lorsque le produit de programme informatique est exécuté sur un ordinateur, l'ordinateur est activé pour effectuer le procédé selon la revendication 1.

8. Produit de programme informatique comprenant une instruction, lorsque le produit de programme informatique est exécuté sur un ordinateur, l'ordinateur est activé pour effectuer le procédé selon la revendication 2.
